(19) **Europäisches Patentamt**

**European Patent Office**

**Office européen des brevets**

(11) **EP 0 766 421 B1**

(12) **EUROPÄISCHE PATENTSCHRIFT**

(45) Veröffentlichungstag und Bekanntmachung des Hinweises auf die Patenterteilung:
**12.05.2004   Patentblatt 2004/20**

(51) Int Cl.7: **H04J 3/14**

(21) Anmeldenummer: **96114962.2**

(22) Anmeldetag: **18.09.1996**

(54) **Verfahren zur Erkennung eines Path-Trace oder eines Section-Trace in SDH-Signalen**

Method for detecting a Path Trace or a Section Trace in SDH signals

Méthode de détection de Path Trace ou de Section Trace dans des signaux SDH

(84) Benannte Vertragsstaaten:
**CH ES FR GB IT LI NL SE**

(30) Priorität: **29.09.1995  DE 19536475**

(43) Veröffentlichungstag der Anmeldung:
**02.04.1997   Patentblatt 1997/14**

(73) Patentinhaber: **SIEMENS AKTIENGESELLSCHAFT
80333 München (DE)**

(72) Erfinder: **Drews, Wolfgang, Dr. Ing.
82194 Gröbenzell (DE)**

(56) Entgegenhaltungen:
**EP-A- 0 613 270        GB-A- 2 286 745
GB-A- 2 292 872**

• **PATENT ABSTRACTS OF JAPAN vol. 017, no. 470 (E-1422), 26. August 1993 & JP 05 110584 A (FUJITSU LTD), 30. April 1993**

**Beschreibung**

Eine in ein Kommunikationsnetz integrierte Synchrone digitale Hierarchie SDH läßt den Transport verschiedener, durch unterschiedliche Bitraten und Strukturen gekennzeichnete Signalfolgen zu, ohne daß das gesamte Kommunikationsnetz jeweils umgestaltet werden muß. Eine Übertragung von Signalfolgen mit unterschiedlichen Bitraten oder Strukturen wurde durch eine Subsignalform möglich. Diese Subsignalform wird durch sogenannte Virtuelle Container (VC) gebildet. Die Virtuellen Container werden durch gleichlaufende Transport-Module (STM) durch die Netzknoten des Kommunikationsnetzes transportiert. Ein Virtueller Container besteht aus einem Pfadkopfteil (Path-Overhead) POH und einem Container (C). Ein Virtueller Container wird durch eine Wegmitschrift (Path-Trace) gekennzeichnet. Der Path-Trace wird im Path-Overhead (J1-Byte) übertragen und dieser dem Container nach der Aufnahme des Nutzsignals zugeordnet und verbleibt bei diesem bis zum Demultiplexen der Nutzlast. Im allgemeinen umfaßt ein Path mehr als einen Übertragungsabschnitt. In der Synchronen digitalen Hierarchie werden diese Übertragungsabschnitte als Multiplex - bzw. Regenerator-Section bezeichnet, die jeweils durch ein Section-Trace gekennzeichnet sind, der in einem Abschnittsrahmenkopf (Section-Overhead) vermerkt ist. Der Section-Overhead ist Teil eines STM-Rahmens. Die Empfehlungen G.708, G.709 und G.783 beschreiben die Kennzeichnung eines Virtuellen Containers und einer Regenerator-Section. Betriebs-, Verwaltungs- und Wartungsfunktionen basieren u.a. auf einer Auswertung des Path- oder Section-Overheads. Weiterhin ist nach CCITT ein Byte eines Section-Overheads vorgesehen (J0-Byte), das die Übertragung eines Section-Trace in den gleichlaufenden Transport Modulen festlegt.

Für beide Trace-Typen - Path/Section - wird ein Übertragungsformat angestrebt, das aus einer Folge von 16 Byte besteht. Die Übertragung der Bytes erfolgt in 16 zeitlich aufeinanderfolgenden Rahmen im jeweiligen Overhead-Byte.

Der Trace wird in den Synchronen Digitalen Hierarchie-Netzelementen des Kommunikationsnetzes an den empfangsseitigen Abschlußpunkten eines Übertragungsabschnittes sowie an möglichen internen Beobachtungspunkten in Multiplexgeräten und Crossconnectoren auf Korrektheit überwacht. Diese Überwachung erfolgt durch Vergleich des empfangenen Trace mit dem jeweils zu erwartenden Trace, der vom Gerätebetreiber bei der Konfiguration der einzelnen Netzelemente vorgegeben wird. Im Falle der Nichtübereinstimmung wird ein Alarm erzeugt, wobei anstelle des empfangenen Nutzsignals ein Alarm Indication Signal AIS-Signal in Übertragungsrichtung sowie eine Far End Receive Failure FERF-Indikation entgegen der Übertragungsrichtung übertragen wird.

Ein relevanter Stand der Technik ist in den Patentanmeldungen JP 05 110 584 and GB 2 286 745 zu finden.

Aufgabe der Erfindung ist es, ein weiteres Verfahren zur Erkennung eines Path- und eines Section-Trace bei einer SDH-Signalübertragung anzugeben.

Die Aufgabe wird erfindungsgemäß durch die im Patentanspruch 1 genannten Merkmale gelöst.

Durch die erfindungsgemäßen Maßnahmen ergibt sich der Vorteil einer sicheren und stabilen Erkennung eines korrekten Trace.

Das Verfahren bringt weiter den Vorteil mit sich, daß Fehlalarme während bzw. nach unmittelbarer Wiederherstellung einer Signalunterbrechung bei noch unbekanntem Trace vermieden werden.

Das Verfahren bringt den weiteren Vorteil mit sich, daß ein geringer Rechenaufwand zur Unterstützung bzw. zum Auswerten eines Trace notwendig ist.

Weitere vorteilhafte Ausbildungen der Erfindung sind in den Unteransprüchen angegeben.

Weitere Besonderheiten der Erfindung werden aus der nachfolgenden näheren Erläuterung eines Ausführungsbeispiels anhand von schematischen Zeichnungen ersichtlich.

Es zeigen:

Fig. 1   ein Blockdiagramm,
Fig. 2   ein Flußdiagramm zur Berechnung des Trail Status,
Fig. 3   ein Flußdiagramm zur Entscheidung, ob ein Trace bestimmt werden kann,
Fig. 4   ein Flußdiagramm zur Entscheidung, ob der bisherige Trace bestätigt oder ein neuer Trace bestimmt werden soll,
Fig. 5   ein Flußdiagramm zur Bestimmung eines neuen Trace,
Fig. 6   ein Flußdiagramm zum Bestätigen eines bestehenden Trace, und
Fig. 7   ein Flußdiagramm zur Entscheidung, ob der aktuelle Trace mit dem erwarteten verglichen werden soll.

Bei dem erfindungsgemäßen Verfahren werden mikroprozessorgesteuert die von einem anwenderspezifischen integrierten Baustein ASIC selektierten Path/Section-Trace Bytes aus dem Datenstrom im Hinblick auf eine sichere und stabile Erkennung eines Trace untersucht. Bei einem sicheren Vorliegen eines Trace-Mismatch wird mikroprozessorgesteuert eine Einblendung eines -Alarm Indication Signal's- AIS in Empfangsrichtung sowie eine Signalisierung -Far and Receive Failure- FERF entgegen der Empfangsrichtung ausgelöst.

Das nachfolgend beschriebene Verfahren beruht auf einem Algorithmus, der für eine Implementierung in Hardware und Software ausgebildet werden kann.

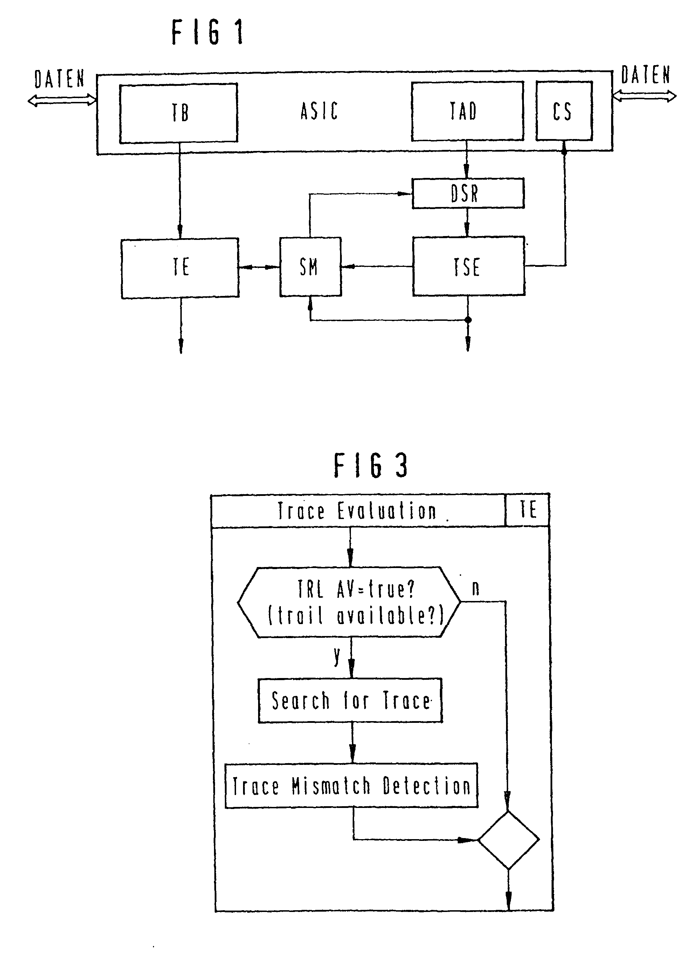

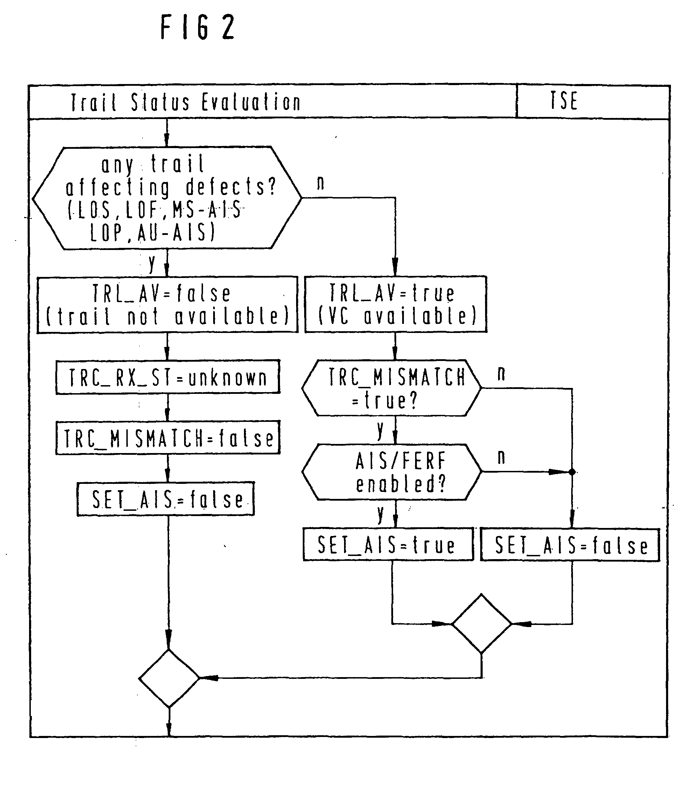

Die Funktion der Hardware des ASIC-Bausteins besteht darin, das Trace-Byte (J1/J0) des jeweiligen SDH-Signals in aufeinanderfolgenden STM-Rahmen zu extrahieren und in einem byteorientierten Datenpuffer RAM zu speichern (siehe Fig. 1). Hierzu kann beispielsweise ein 3 x 16 Byte großer RAM Puffer verwendet werden, um auf einfache Weise eine Wiederholungsprüfung (Persistenz-Prüfung), die nachfolgend beschrieben wird, zu ermöglichen. Weiterhin besitzt der ASIC-Baustein Überwachungssensoren zur Erkennung von Signalunterbrechungen innerhalb eines Path bzw. einer Regenerator-Section. Diese Überwachungssensoren signalisieren ein -Loss of Signal- LOS, -Loss of Frame- LOF, - Multiplex-Section-AIS - MS-AIS , -Loss of Pointer- LOP und AU-AIS, zudem wird nach Maßgabe von Programmprozeduren ein Steuersignal zur Einblendung des Alarm Indication AIS und ein Steuersignal zur Einblendung des Far and Receive Failure FERF Signals (nur im Falle eines Path) erzeugt. Die Überwachungssensoren sowie der Inhalt des Trace-Puffers wird über einen Prozessor abgefragt.

Fig. 1 beschreibt eine übergeordnete Struktur des Algorithmus anhand von Funktionsblöcken und den zwischen den Funktionsblöcken stattfindenden Datenfluß. Die Überwachungssensoren TAD dienen zu Erkennung der oben aufgeführten Signalunterbrechungen. Diese werden von einem , hier nicht explizit dargestellten Prozessor zyklisch mit einem ersten Abfrageintervall T1 abgefragt und registrierte Signalunterbrechungen in einem Defekt Status Register DSR gespeichert. Weiterhin wird ein noch anliegender Alarmzustand TRC-MISMATCH TRC-MM aus einem Zustandsspeicher SM gelesen und ebenfalls im Defekt Status Register DSR gespeichert. Der Inhalt des Defekt Status Registers DSR wird im Funktionsblock oder Modul -Trail Status Evaluation- TSE weiter verarbeitet. In diesem Funktionsblock wird der Alarmzustand TRC-MISMATCH TRC-MM bestimmt und auch die Einblendung vom AIS-Signal durch die Zustandsvariable SET-AIS gesteuert. Weiterhin liefert das Trail Status Evaluation Modul TSE folgende Zustandsvariablen TRL-AV und TRC-RX-ST, die zur Steuerung der Abläufe im Funktionsblock Trace Evaluation-TE dienen:

TRL-AV: Zustand des betrachteten Übertragungsweges (Path/Section), wobei dieser als "verfügbar" (available) oder "nicht verfügbar" (unavailable) gekennzeichnet ist.

TRC-RX-ST: Empfangszustand des Trace. Diese kann einen der Werte "bestätigt", "unbestätigt" oder "unbekannt" annehmen.

Der Funktionsblock -Trace Evaluation-TE stellt den Kern des Auswertealgorithmus für den Trace (Path/Section) dar. Dieses Modul TE wird vom Prozessor ebenfalls zyklisch, jedoch asynchron zum ersten Abfrageintervall am Funktionsblock "Trail Status Evaluation" TSE mit einem zweiten Abfrageintervall T2 angestoßen. Aufgrund des größeren Rechenaufwandes ist es zweckmäßig, daß dieses Modul TE Block seltener im Vergleich zum ersten Abfrageintervall angestoßen wird (T2 > T1). Das Modul TE nimmt ebenfalls Einfluß auf die Zustandssignale TRC-RX-ST und das Alarmsignal TRC-MISMATCH. Das Modul TE liefert weiterhin den im Datenstrom erkannten Trace (TRC-RX).

Die Module "Trail Status Evaluation"-TSE und "Trace Evaluation"-TE werden in den folgenden Abschnitten detailliert beschrieben.

Der in der Figur 2 abgebildete Programmablauf des Moduls "Trail Status Evaluation"-TSE prüft zunächst die Verfügbarkeit des Übertragungsabschnitts anhand der signalisierten Defekte auf der Übertragungstecke:

- LOS (Loss of Signal, für Verfügbarkeit von Section und Path)
- LOF (Loss of Frame, für Verfügbarkeit von Section und Path)
- MS-AIS (Multiplex-Section-AIS, nur für Verfügbarkeit des Path)

Die Verfügbarkeit eines Regenerationsabschnittes ist auch bei Empfang von MS-AIS gegeben; für den Section-Trace gilt hierbei gemäß ITU-T, daß die entsprechenden Trace-Bytes in jedem Regeneratorabschnitt neu eingesetzt werden.

- LOP (Loss of Pointer, nur für Verfügbarkeit des Path)
- AU-AIS (nur für Verfügbarkeit des Path)

Falls mindestens einer der signalisierten Defekte in einem betrachteten Übertragungsabschnitt vorliegt, werden folgende Aktionen ausgeführt:

- Die Zustandsvariable TRL-AV wird auf "false" (Übertragungsabschnitt nicht verfügbar) gesetzt, um so die Auswertung des Trace im Modul oder Funktionsblock "Trace Evaluation" zu sperren.
- Die Zustandsvariable TRC-RX-ST wird auf "unknown" gesetzt, um nach Verschwinden des Defekts eine Neubestimmung des Trace einzuleiten.
- Die Zustandsvariablen TRC-MISMATCH und SET-AIS werden auf "false" gesetzt, um eine fälschliche Alarmerzeugung und AIS/FERF-Einblendung zu vermeiden, insbesondere in der Übergangszeit nach Verschwinden der o.g. Defekte, solange noch keine Neubestimmung des Trace erfolgen konnte.

Falls keiner dieser Defekte, die den betrachteten Übertragungsabschnitt betreffen, momentan vorliegt, werden folgende Aktionen ausgeführt:

- Die Zustandsvariable TRL-AV wird auf "true" (Übertragungsabschnitt verfügbar) gesetzt, um so die Auswertung des Trace im Funktionsblock "Trace Evaluation" freizugeben.
- Falls die Zustandsvariable TRC-MISMATCH den Wert "true" besitzt und die Einblendung von AIS/FERF für diesen Fall durch einen vom Gerätebetreiber eingestellten Konfigurationsparameter freigegeben ist, wird AIS/FERF durch Setzen der Zustandsvariable SET-AIS auf "true" eingeleitet.

In den in Figur 3 dargestellten Programmschritten des Moduls Trace Evaluation TE wird zunächst die momentane Verfügbarkeit des Übertragungsabschnittes anhand des Zustandssignals TRL-AV dessen Wert der im Funktionsblock "Trail Status Evaluation" bestimmt worden ist, abgefragt. Bei Nichtverfügbarkeit werden keine weiteren Aktionen ausgeführt und alle Ausgangsgrößen behalten ihre bisherigen Werte.

Bei Verfügbarkeit des Übertragungsabschnittes werden die Unterprogramme "Search for Trace" und "Trace Mismatch Detection" nacheinander ausgeführt. Die dort durchgeführten Programmschritte führen zur Bestimmung der Zustandsvariablen TRC-MISMATCH, TRC-RX-ST und des aktuellen Trace TRC-RC.

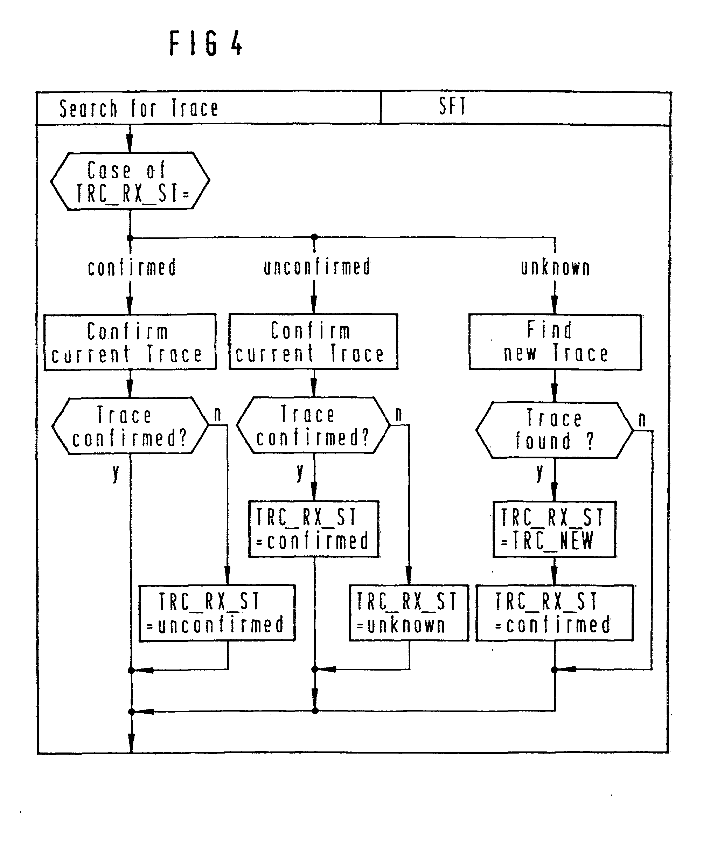

In der Figur 4 ist das Programmmodul -Search for Trace- SFT dargestellt. Dieses Programmmodul steuert die Bestimmung des aktuellen Trace, wobei dies unterschiedlich je nach aktuellem Wert der Zustandsvariablen TRC-RX-ST erfolgt.

Für TRC RX ST = "unknown" (Trace unbekannt):

In diesem Zustand wird der Funktionsblock "Find new Trace" zur erstmaligen bzw. erneuten Bestimmung des Trace aufgerufen. Bei erfolgreicher Bestimmung wird der neu gefundene Wert TRC-NEW als aktueller Trace in der Variablen TRC-RX abgespeichert und die Zustandsvariable TRC-RX-ST auf "confirmed" gesetzt. Bei nicht erfolgreicher Bestimmung bleibt der bisherige Zustand erhalten, so daß beim folgenden Aufruf des Algorithmus die Bestimmung erneut versucht wird.

Für TRC RX ST = "confirmed":

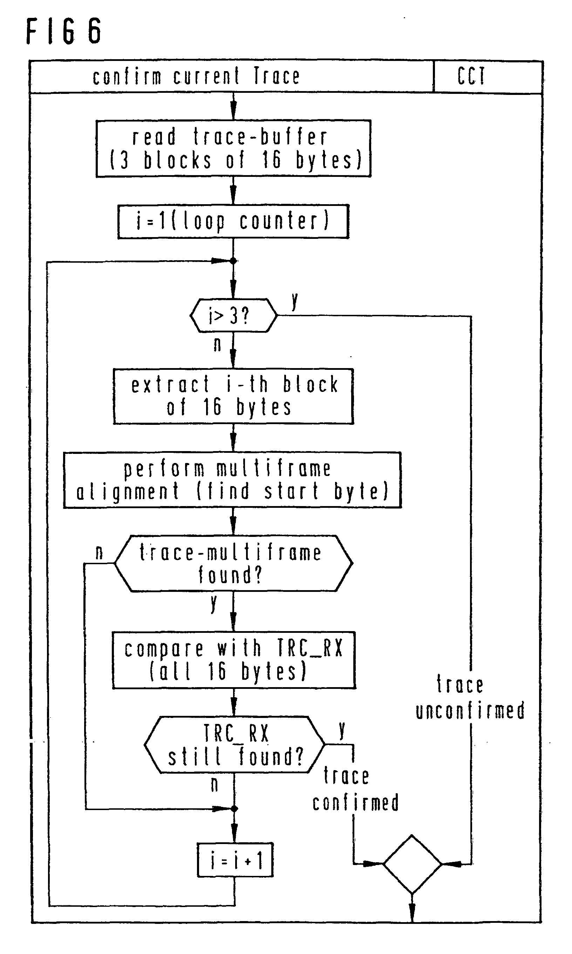

In diesem Zustand wird davon ausgegangen, daß beim vorigen Aufruf des Algorithmus der aktuelle Trace TRC-RX entweder gefunden oder bestätigt worden ist. Es wird daher der Funktionsblock "Confirm current Trace" aufgerufen, in der Erwartung, den bisherigen Wert wiederum zu bestätigen. Zur Bestätigung wird ein weniger strenges Kriterium als zur Neubestimmung verwendet (siehe Beschreibung Fig. 6). Bei erfolgreicher Bestätigung bleibt der bisherige Zustand erhalten.

Bei nicht erfolgreicher Bestätigung wird die Zustandsvariable TRC-RX-ST auf "unconfirmed" gesetzt, der bisherige Trace TRC-RX wird jedoch weiterhin als gültig angesehen und bleibt daher unverändert.

Für TRC RX ST = "unconfirmed":

In diesem Zustand wird davon ausgegangen, daß beim vorigen Aufruf des Algorithmus der aktuelle Trace TRC-RX nicht bestätigt worden ist. Es wird wiederum der Funktionsblock "Confirm current Trace" aufgerufen, in der Erwartung, den bisherigen Wert diesmal zu bestätigen. Bei erfolgreicher Bestätigung wird die Zustandsvariable TRC-RX-ST auf "confirmed" gesetzt und der bisherige Trace bleibt weiterhin gültig. Bei wiederum nicht erfolgreicher Bestätigung wird die Zustandsvariable TRC-RX-ST auf "unknown" gesetzt und damit der bisherige Trace als ungültig erklärt, so daß beim folgenden Aufruf des Algorithmus eine Neubestimmung eingeleitet wird.

Durch diese zustandsgesteuerte Überwachung des Trace wird die Neubestimmung des Trace zu Beginn bzw. nach Erkennung von Signalunterbrechungen eingeleitet, wohingegen im unterbrechungsfreien Betrieb erst nach zweimaliger Nichtbestätigung des aktuellen Trace eine Neubestimmung eingeleitet wird. Hierdurch entsteht ein robustes Verhalten bei gestörtem Trace im Falle von kurzen Bitfehlerbursts sowie bei statistischen Fehlerraten bis 10E-3.

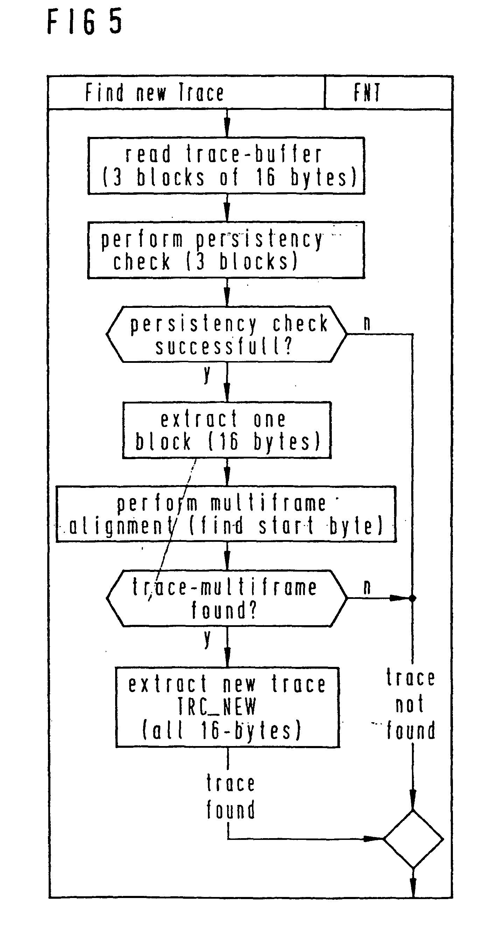

In der Figur 5 ist der Programmablauf des Programmmodul -Find new Trace- FNT dargestellt, bei dem zur Neubestimmung des Trace folgende Verfahrensschritte durchgeführt werden:

- In dem Trace-Puffer des ASICs werden 48 Trace-Bytes aus zeitlich aufeinanderfolgenden Rahmen des SDH-Signals eingelesen. Anschließend wird der Trace-Puffer des ASICs vom Mikroprozessor in Form von 3 x 16-Byte-Datenblöcken ausgelesen, von denen im Normalfall jeder den Trace enthält, jedoch in einer noch unbekannten Phasenlage.
- Es wird eine Persistenzprüfung über die 3 Datenblöcke durchgeführt mit der Bedingung, daß die einander entsprechenden Bytes jedes Datenblocks exakt gleich sind. Schlägt die Persistenzprüfung fehl, so gilt der Trace als nicht gefunden.
- Ist die Persistenzprüfung erfolgreich, so wird aus den 3 Datenblöcken ein beliebiger zur weiteren Verarbeitung extrahiert.
- In dem extrahierten Datenblock wird versucht, das Byte mit MSB=1 als das Start-Byte des Trace (Byte 1 in Tabelle 1) zu finden. Gelingt es nicht, so gilt der Trace als nicht gefunden, anderenfalls gilt die 16-Byte-Folge mit dem erkannten Start-Byte als neu gefundener Trace.

Die Auswertung der von der Norm festgelegten CRC-Bits, die im Startbyte enthalten sind, wird durch eine Wiederholungsprüfung (Persistenzprüfung) über die 3 x 16-Byte-Datenblöcke überflüssig, da hiermit bereits ein sehr stabiles Verhalten bei Übertagungsbitfehlern mit folgenden Eigenschaften erreicht wird:

- Bei einer Bitfehlerrate von $10^{-3}$ im betrachteten Übertragungsabschnitt kommt die Erkennung eines falschen Trace (scheinbar erkannter Trace stimmt nicht mit dem im Signal vorhandenen Trace überein) mit der Wahrscheinlichkeit von 8,7 x $10^{-8}$ vor.
- Bei einer Bitfehlerrate von $10^{-3}$ im betrachteten Übertragungsabschnitt wird der im Signal vorhandene Trace mit einer Wahrscheinlichkeit von 0,68 erkannt.

In dem in der Figur 6 gezeigten Modul -Confirm current Trace-CCT wird die Bestätigung eines bereits bekannten Trace nach folgendem Verfahren abgebildet:

- In dem Trace-Puffer des ASCIs werden 48 Trace-Bytes aus zeitlich aufeinanderfolgenden Rahmen des SDH-Signals eingelesen. Anschließend wird der Trace-Puffer des ASICs vom Mikroprozessor in Form von 3 x 16-Byte-Datenblöcken ausgelesen und von denen im Normalfall jeder einzelne den Trace enthält, jedoch in einer noch unbekannten Phasenlage.

- In einer Schleife mit dem Zählindex i=1,...,3 wird jeweils der i-te 16-Byte-Datenblock extrahiert und versucht, das Byte mit MSB=1 als das Start-Byte des Trace zu finden. Gelingt dies nicht, so wird der folgende, (i+1)-te Datenblock extrahiert und entsprechend untersucht. Wird das Start-Byte gefunden, dann gilt die 16-Byte-Folge mit dem erkannten Start-Byte als gefundener Trace und wird mit dem bisher bekannten Trace TRC-RX verglichen. Im Falle der Übereinstimmung gilt der bisherige Trace als bestätigt, im Falle der Nichtübereinstimmung wird der (i+1)-te Datenblock extrahiert und entsprechend verfahren.

Die Überprüfung des CRC-Bits mit einer CRC-7-Prüfung ist nicht durchzuführen da diese bereits bei der Bestätigung des aktuellen Trace TRC-RX mitberücksichtigt werden.

- Wird in keinem der 3 x 16-Byte-Datenblöcke ein Trace gefunden, der mit dem aktuellen Wert TRC-RC übereinstimmt, so gilt der Trace als unbestätigt.

In Verbindung mit dem Funktionsblock "Search for Trace" wird folgendes Verhalten bei Übertragungsbitfehlern erreicht:

- Bei einer Bitfehlerrate von $10^{-3}$ im betrachteten Übertragungsabschnitt kommt eine zweimalige aufeinanderfolgende Nichtbestätigung des aktuellen Trace (dies führt durch Setzen von TRC-RX-ST="unknown" zum Zustand eines unbekannten Trace und leitet eine Neubestimmung ein) mit einer Wahrscheinlichkeit von 3 x $10^{-6}$ vor

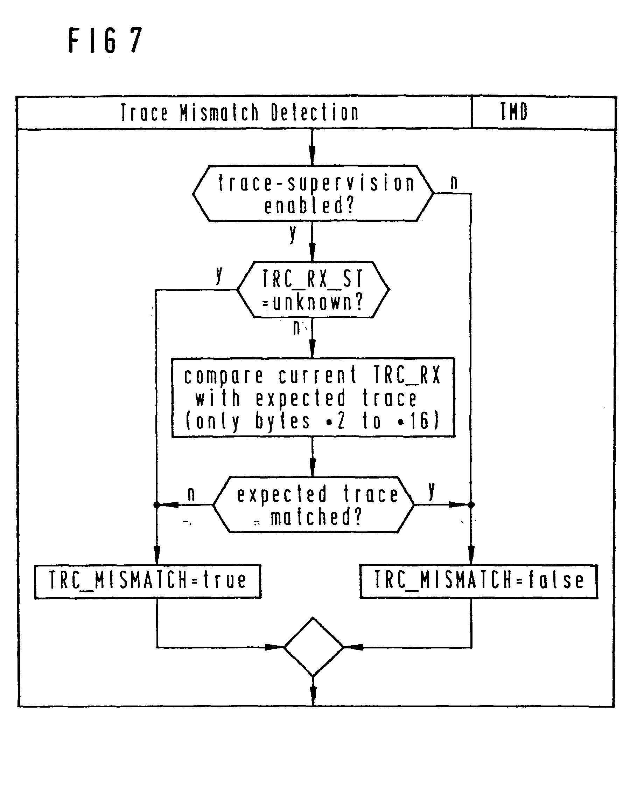

In dem in Figur 7 abgebildeten Modul -Trace Mismatch Detection- TMD wird der Wert der Zustandsvariablen TRC-MISMATCH wie folgt bestimmt:

- Falls die Überwachung des Trace durch einen vom Gerätebetreiber eingestellten Konfigurationsparameter freigegeben ist, werden noch folgende Abfragen ausgeführt, ansonsten wird die Zustandsvariable TRC-MISMATCH auf "false" (Alarm aus) gesetzt.
- Besitzt die Zustandsvariable TRC-RX-ST den Wert "unknown" (aktueller Trace unbekannt), so wird TRC-MISMATCH auf "true" (Alarm ein) gesetzt.
- Besitzt die Zustandsvariable TRC-RX-ST den Wert "confirmed" oder "unconfirmed" (aktueller Trace bekannt), so wird der aktuelle Trace mit dem erwarteten Trace (vom Gerätebetreiber konfiguriert) verglichen und bei Überein- bzw. Nichtübereinstimmung die Zustandsvariable TRC-MISMATCH auf "false" (Alarm aus) bzw. "true" (Alarm ein) gesetzt. Der Vergleich kann sich auf die Bytes 2 bis 16 des Trace beschränken, da die CRC-bits im Falle der Übereinstimmung ebenfalls gleich sind.

Die in den vorangegangenen Figurenbeschreibungen aufgeführten Fehlerwahrscheinlichkeiten werden nach folgenden Formeln berechnet:

Im folgenden werden die Berechnungsformel für die in den Funktionsblöcken "Find new Trace" und "Confirmed Current Trace" angegebenen Fehlerwahrscheinlichkeiten abgeleitet. Es sei N die Anzahl der Bits, aus denen der Trace besteht. Hier in diesem Ausführungsbeispiel sei N = 8 x 16 = 128, p die Wahrscheinlichkeit für einen Übertragungsbitfehler, wobei hier der Grenzwert für $p = 10^{-3}$ angenommen wird. Bei statistisch unabhängigen Bitfehlern entsteht die Anzahl der verfälschten Trace-Bits einer Binominalverteilung.

Zur Erkennung des Trace muß gemäß des Funktionsblocks der unter Figur 5 beschrieben ist sollte eine Persistenzprüfung über drei empfangene Traceblöcke erfolgen. Unter der Annahme, daß jeder Block durch exakt das gleiche Bitfehlermuster gestört wird, kann es zur Erkennung eines falschen Trace kommen. Betrachtet man hierbei alle n-Bitfehlermuster mit nur einem gestörten Bit (dies ist der "wahrscheinlichste" Fall), so gilt für die Erkennungswahrscheinlichkeit $P_1$:

$$P_1 = N\left[p(1-p)^{N-1}\right]^3 = 8{,}7 * 10^{-8} \qquad (1)$$

Die Erkennung des richtigen Trace erfolgt bei Empfang von 3 fehlerfreien Trace-Blöcken. Hierfür gilt die Erkennungswahrscheinlichkeit $P_2$:

$$P_2 = (1 - p)^{3N} = 0{,}68 \qquad (2)$$

Eine zweimalige Nichtbestätigung gemäß dem Funktionsblock der unter Figur 6 dargestellt ist erfolgt bei Empfang von 6 durch beliebige Bitfehlermuster gestörten Trace-Blöcken. Hierfür gilt die Wahrscheinlichkeit $P_3$:

$$P_3 = \left[1 - (1-p)^N\right]^6 = 3 * 10^{-6} \qquad (3)$$

Das Verfahren ist besonders für eine gemischte Implementierung in Hardware und Software ausgelegt, wie sie bei üblichen Realisierungsformen in der SDH-Technik auftreten, es ist jedoch auch eine reine Hardware-Implementierung denkbar. Bei der durch Software unterstützte Implementierung ist es ein besonderer Vorteil, daß auf die rechenintensive Auswertung des CRC-7 verzichtet werden kann.

**Patentansprüche**

1. Verfahren zur Erkennung von zu einem Synchronen Transportmodul oder eines Virtuellen Containers gehörenden Tracedaten, wobei die Tracedaten des Synchronem Transportmoduls aus einem Section-Trace J0 und die Tracedaten des Virtuellen Containers aus einem Path-Trace J1 gebildet werden, die innerhalb einer vorgegebenen Rahmenstruktur der synchronen digitalen Hierarchie, kurz SDH, in einem Kommunikationsnetz übertragen werden,
   **dadurch gekennzeichnet, dass** aus dem Overhead des Synchronen Transportmoduls bzw. Virtuellen Containers Tracedaten J0 oder J1 und Störmeldungen, zum Beispiel LOS, LOF, MS-AIS, LOP und Au-AIS, selektiert und zwischengespeichert werden,
   in einem ersten Programmmodul (TSE) die Verfügbarkeit eines Übertragungsabschnittes anhand der selektierten Störmeldungen überprüft wird, und von diesem ersten Programmmodul (TSE) Zustandsvariablen (TRL-AV, TRC-RX-ST) bezüglich dieser Verfügbarkeit geliefert werden, und
   bei Verfügbarkeit eines Übertragungsabschnittes die selektierten Tracedaten J0 oder J1 einem zweiten Programmmodul (TE) zugeleitet und nach Maßgabe von Unterprogrammprozeduren (SFT,TMD) in Abhängigkeit mit den Zustandsvariablen (TRL-AV, TRC-RX-ST) bezüglich der Verfügbarkeit eines Übertragungsabschnittes die aktuellen Tracedaten sowie dessen Zustandsvariablen (TRC-RX-ST, TRC-MM, TRC-RX) bestimmt werden.

2. Verfahren nach Anspruch 1,
   **dadurch gekennzeichnet,**
   **daß** nach Maßgabe des ersten Programmoduls (TSE) die selektierten Störmeldungen ausgelesen und ausgewertet werden,
   **daß** ein Alarmzustand (TRC-MM) bestimmt und die Einblendung eines Alarmsignals (AIS) aufgrund einer Alarm-Zustandsvariable (SET-AIS) veranlaßt wird,
   **daß** die Zustandsvariablen (TRC-MM, TRX-RX-ST, TRC-RX) zur Steuerung der dem zweiten Programmodul (TE) zugeordneten Unterprogrammprozeduren (SFT,TDM) in einer Zustandsspeichereinheit (SM) zwischengespeichert werden.

3. Verfahren nach Anspruch 1,
**dadurch gekennzeichnet,**
**daß** in dem zweiten Programmodul (TE) in einem ersten Programmschritt die Verfügbarkeit der Sektion anhand einer ersten Zustandsvariable (TRL-AV) überprüft wird,
**daß** bei Nichtverfügbarkeit der ersten Zustandsvariable (TRL-AV) keine weiteren Programmschritte ausgeführt werden und alle Ausgangsgrößen des zweiten Programmoduls (TE) ihre bisherigen Werte beibehalten,
**daß** bei Verfügbarkeit der ersten Zustandsvariable (TRL-AV) eine erste und zweite Unterprogrammprozedur (SFT, TDM) ausgeführt wird, wobei die Zustandsvariablen (TRC-MM, TRC-RX-ST, TRC-RX) bestimmt und in einer Zustandsspeichereinheit (SM) abgespeichert werden.

4. Verfahren nach einem der vorhergehenden Ansprüche,
**dadurch gekennzeichnet,**
**daß** eine erste Unterprogrammprozedur (SFT) ausgehend von dem aktuellen Wert einer zugehörigen Zustandsvariable (TRC-RX-ST) der den Empfangszustand eines Trace angibt die Bestimmung der aktuellen Tracedaten ermittelt werden.

5. Verfahren nach einem der vorhergehenden Ansprüche,
**dadurch gekennzeichnet,**
**daß** bei nicht Auffinden einer einen aktuellen Trace anzeigenden Zustandsvariable ein Alarm (TRC-MM) durch eine zweite Unterprogrammprozedur (TMD) erfolgt,
**daß** bei bekannter weiterer Zustandsvariablen (TRC-RX-ST) diese mit einem erwarteten Trace verglichen und bei Übereinstimmung die den Alarm auslösende Zustandsvariable (TRC-MM) zurückgenommen oder bei Ungleichheit ein Alarm gesetzt wird.

6. Verfahren nach einem der vorhergehenden Ansprüche,
**dadurch gekennzeichnet,**
**dass** ein Vergleich mit den jeweils zu erwartenden Tracedaten und den einem Gerät zugewiesenen Tracedaten durchgeführt wird, wobei bei Nichtübereinstimmung ein Alarmsignal (AIS) in weiterführender Senderichtung durchgeführt wird.

7. Schaltungsanordnung zur Erkennung von zu einem Synchronen Transportmodul oder eines Virtuellen Containers gehörenden Tracedaten, wobei die Tracedaten des Synchronem Transportmoduls aus einem Section-Trace J0 und die Tracedaten des Virtuellen Containers aus einem Path-Trace J1 gebildet werden, die innerhalb einer vorgegebenen Rahmenstruktur der synchronen digitalen Hierarchie, kurz SDH, in einem Kommunikationsnetz übertragen werden,
**dadurch gekennzeichnet,**
**dass eine Speichereinheit (TB)** zur Zwischenspeicherung der im Overhead des Synchronen Transportmoduls bzw. Virtuellen Containers angeordneten Tracedaten J0 oder J1, **Überwachungssensoren (TAD)** zur Selektion von Störmeldungen, zum Beispiel LOS, LOF, MS-AIS, LOP und Au-AIS
eine **Zwischenspeichereinheit (DSR)** zur Zwischenspeicherung der selektierten Störmeldungen ein erstes Modul (TSE) und ein zweites Modul (TE) vorgesehen sind,
**dass** das **erste Modul (TSE)** derart ausgebildet ist, dass dieses die Verfügbarkeit eines Übertragungsabschnittes anhand der selektierten Störmeldungen überprüft und Zustandsvariable (TRL-AV, TRC-RX-ST) bezüglich dieser Verfügbarkeit erzeugt,
und **dass** das **zweite Modul (TE)** derart ausgebildet ist, dass diesem bei Verfügbarkeit eines Übertragungsabschnittes die selektierten Tracedaten J0 oder J1 zugeleitet werden und nach Maßgabe von Unterprogrammprozeduren (SFT,TMD) in Abhängigkeit mit den Zustandsvariablen (TRL-AV, TRC-RX-ST) bezüglich der Verfügbarkeit eines Übertragungsabschnittes die aktuellen Tracedaten sowie dessen Zustandsvariablen (TRC-RX-ST, TRC-MM, TRC-RX) bestimmt.

8. Schaltungsanordnung nach Anspruch 7,
**dadurch gekennzeichnet,**
**dass** das erste **Modul (TSE)** die selektierten Störmeldungen ausliest und auswertet, wobei ein Alarmzustand (TRC-MM) bestimmt und die Einblendung eines Alarmsignals (AIS) aufgrund einer Alarm-Zustandsvariable (SET-AIS) veranlasst wird und die Zustandsvariablen (TRC-MM, TRX-RX-ST, TRC-RX) zur Steuerung des zweitem Moduls (TE) in einer Zustandsspeichereinheit (SM) zwischengespeichert werden.

9.  Schaltungsanordnung nach Anspruch 7 oder 8,
    **dadurch gekennzeichnet,**
    **dass** das zweite **Modul (TE)** derart ausgebildet ist, dass die Verfügbarkeit der Sektion anhand einer ersten Zustandsvariable (TRL-AV) überprüft wird,
    **dass** bei Nichtverfügbarkeit der ersten Zustandsvariable (TRL-AV) keine weiteren Schritte ausgeführt werden und
    alle Ausgangsgrößen **des zweiten Moduls (TE)** ihre bisherigen Werte beibehalten werden,
    **dass** bei Verfügbarkeit der ersten Zustandsvariable (TRL-AV) eine erste und zweite Unterprogrammprozedur (SFT,
    TDM) ausgeführt wird, wobei die Zustandsvariablen (TRC-MM, TRC-RX-ST, TRC-RX) bestimmt und in der Zustandsspeichereinheit (SM) abgespeichert werden.

**Claims**

1.  Method for detecting trace data belonging to a synchronous transport module or a virtual container, the trace data
    of the synchronous transport module consisting of a section trace J0 and the trace data of the virtual container
    consisting of a path trace J1, this data being transmitted in a communication network, within a specified frame
    structure of the synchronous digital hierarchy known as SDH for short, **characterized in that** trace data J0 or J1
    and fault messages such as LOS, LOF, MS-AIS, LOP and AU-AIS are selected from the overhead of the synchronous transport module or virtual container and temporarily stored, and **in that** the availability of a transmission
    section is checked in a first program module (TSE) with the aid of the selected fault messages, and status variables
    (TRL-AV, TRC-RX-ST) concerning this availability are delivered by this first program module (TSE), and **in that**
    the selected trace data J0 or J1 is forwarded to a second program module (TE) if a transmission section is available
    and in accordance with subroutine procedures (SFT, TMD) as well as in accordance with the status variables
    (TRL-AV, TRC-RX-ST) concerning availability of a transmission section the current trace data and its status variables (TRC-RX-ST, TRC-MM, TRC-RX) are detected.

2.  Method according to Claim 1, **characterized in that** the selected fault messages are read out and evaluated in
    accordance with the first program module (TSE), and **in that** an alarm status (TRC-MM) is detected and the display
    of an alarm signal (AIS) is triggered due to an alarm status variable (SET-AIS), and **in that** the status variables
    (TRC-MM, TRX-RX-ST, TRC-RX) for controlling the subroutine procedures (SFT, TDM) assigned to the second
    program module (TE) are temporarily stored in a status memory unit (SM).

3.  Method according to Claim 1, **characterized in that** the availability of the section is checked with the aid of a first
    status variable (TRL-AV) in a first program step in the second program module (TE), and **in that** if the first status
    variable (TRL-AV) is unavailable no further program steps are executed and all output quantities of the second
    program module (TE) retain their previous values, and **in that** if the first status variable (TRL-AV) is available a
    first and second subroutine procedure (SFT, TDM) will be executed, the status variables (TRC-MM, TRC-RX-ST,
    TRC-RX) being detected and stored in a status memory unit (SM).

4.  Method according to one of the preceding claims, **characterized in that** a first subroutine procedure (SFT) takes
    as its starting point the current value of an associated status variable (TRC-RX-ST), which defines the receive
    status of a trace, and determines the current trace data.

5.  Method according to one of the preceding claims, **characterized in that** if a status variable indicating a current
    trace is not found an alarm (TRC-MM) is generated by a second subroutine procedure (TMD), and **in that** if a
    further known status variable (TRC-RX-ST) is present it is compared with an expected trace and if there is a match
    the status variable (TRC-MM) giving rise to the alarm is reset or if there is a mismatch an alarm is set.

6.  Method according to one of the preceding claims, **characterized in that** a comparison is carried out between the
    trace data expected in each case and the trace data assigned to a device, an alarm signal (AIS) being sent in the
    transmit direction in the event of a mismatch.

7.  Circuitry for detecting trace data belonging to a synchronous transport module or a virtual container, the trace data
    of the synchronous transport module consisting of a section trace J0 and the trace data of the virtual container
    consisting of a path trace J1, this data being transmitted in a communication network, within a specified frame
    structure of the synchronous digital hierarchy known as SDH for short, **characterized in that** a memory unit (TB) for temporary storage of the trace data J0 or J1 contained in the synchronous transport module or virtual container, monitoring sensors (TAD) for selecting fault messages such as LOS, LOF, MS-AIS, LOP and AU-AIS, a temporary memory unit (DSR) for temporary storage of the selected fault messages, a first module (TSE) and a second module (TE) are provided, and **in that** the first module (TSE) is designed to check the availability of a transmission section by means of the selected fault messages and generates status variables (TRL-AV, TRC-RX-ST) concerning this availability, and **in that** the second module (TE) is designed so that if a transmission section is available the selected trace data J0 or J1 is forwarded to it, and in accordance with subroutine procedures (SFT, TMD) as well as in accordance with the status variables (TRL-AV, TRC-RX-ST) concerning availability of a transmission section it detects the current trace data and its status variables (TRC-RX-ST, TRC-MM, TRC-RX).

8.  Circuitry according to Claim 7, **characterized in that** the first module (TSE) reads out and evaluates the selected fault messages, so that an alarm status (TRC-MM) is detected and the display of an alarm signal (AIS) is triggered due to an alarm status variable (SET-AIS), and the status variables (TRC-MM, TRX-RX-ST, TRC-RX) for controlling the second module (TE) are temporarily stored in a status memory unit (SM).

9.  Circuitry according to Claim 7 or Claim 8, **characterized in that** the second module (TE) is designed to check the availability of the section by means of a first status variable (TRL-AV), and **in that** if the first status variable (TRL-AV) is unavailable no further steps are executed and all output quantities of the second module (TE) retain their previous values, and **in that** if the first status variable (TRL-AV) is available a first and second subroutine procedure (SFT, TDM) will be executed, the status variables (TRC-MM, TRC-RX-ST, TRC-RX) being detected and stored in the status memory unit (SM).

## Revendications

1.  Méthode de détection de données de trace faisant partie d'un module de transport synchrone ou d'un conteneur virtuel, les données de trace du module de transport synchrone étant constituées d'une trace de section (Section Trace) J0 et les données de trace du conteneur virtuel étant constituées d'une trace de conduit (Path Trace) J1, lesquelles sont transmises à l'intérieur d'une structure de trame donnée de la hiérarchie numérique synchrone, SDH en abrégé, dans un réseau de communication, **caractérisée en ce que** des données de trace J0 ou J1 et des messages de défaut, tels que, par exemple, LOS, LOF, MS-AIS, LOP et Au-AIS sont sélectionnés du surdébit (Overhead) du module de transport synchrone resp. du conteneur virtuel et sont enregistrés temporairement, **en ce que**, dans un premier module de programme (TSE), la disponibilité d'une section de transmission est contrôlée à l'aide des messages de défaut sélectionnés et que des variables d'état (TRL-AV, TRC-RX-ST) relatives à ladite disponibilité sont fournies par ledit premier module de programme (TSE) et **en ce qu'**en cas de disponibilité d'une section de transmission les données de trace sélectionnées J0 ou J1 sont amenées à un deuxième module de programme (TE) et que sont déterminées, conformément à des procédures de sous-programme (SFT, TMD), en dépendance des variables d'état (TRL-AV, TRC-RX-ST) relatives à la disponibilité d'une section de transmission, les données de trace actuelles ainsi que les variables d'état (TRC-RX-ST, TRC-MM, TRC-RX) de celle-ci.

2.  Méthode selon la revendication 1, **caractérisée en ce que**, conformément au premier module de programme (TSE), les messages de défaut sélectionnés sont extraits et évalués, **en ce qu'**un état d'alarme (TRC-MM) est déterminé et que l'affichage d'un signal d'alarme (AIS) est provoqué sur la base d'une variable d'état d'alarme (SET-AIS) et **en ce que** les variables d'état (TRC-MM, TRX-RX-ST, TRC-RX) pour la commande des procédures de sous-programme (SFT, TDM) affectées au deuxième module de programme (TE) sont enregistrées temporairement dans une unité de mémoire d'état (SM).

3.  Méthode selon la revendication 1, **caractérisée en ce que** la disponibilité de la section est contrôlée à l'aide d'une première variable d'état (TRL-AV) dans le deuxième module de programme (TE) dans une première étape de programme, **en ce qu'**en cas de non-disponibilité de la première variable d'état (TRL-AV) aucune autre étape de programme n'est exécutée et que toutes les grandeurs de sortie du deuxième module de programme (TE) conservent les valeurs qu'elles avaient jusqu'alors et **en ce qu'**en cas de disponibilité de la première variable d'état (TRL-AV) une première et une deuxième procédure de sous-programme (SFT, TDM) est exécutée, les variables d'état (TRC-MM, TRC-RX-ST, TRC-RX) étant déterminées et enregistrées dans une unité de mémoire d'état (SM).

4.  Méthode selon l'une des revendications précédentes, **caractérisée en ce qu'**une première procédure de sous-programme (SFT), partant de la valeur actuelle d'une variable d'état associée (TRC-RX-ST) qui indique l'état de réception d'une trace, détermine des données de trace actuelles.

**5.** Méthode selon l'une des revendications précédentes, **caractérisée en ce qu'**au cas où une variable d'état indiquant une trace actuelle est introuvable une alarme (TRC-MM) se produit du fait d'une deuxième procédure de sous-programme (TMD) et **en ce qu'**en présence d'une autre variable d'état connue (TRC-RX-ST) celle-ci est comparée avec une trace attendue et qu'en cas de conformité la variable d'état (TRC-MM) qui déclenche l'alarme est retirée ou, en cas de différence, une alarme est placée.

**6.** Méthode selon l'une des revendications précédentes, **caractérisée en ce qu'**il est procédé à une comparaison avec les données de trace respectivement attendues et les données de trace associées à un appareil, un signal d'alarme (AIS) étant effectué dans le prolongement du sens de l'émission en cas de non-conformité.

**7.** Circuit de détection de données de trace faisant partie d'un module de transport synchrone ou d'un conteneur virtuel, les données de trace du module de transport synchrone étant constitués d'une trace de section (Section Trace) J0 et les données de trace du conteneur virtuel étant constituées d'une trace de conduit (Path Trace) J1, lesquelles sont transmises à l'intérieur d'une structure de trame donnée d'une hiérarchie numérique synchrone, SDH en abrégé, dans un réseau de communication, **caractérisé en ce que** sont prévus
une unité de mémoire (TB) pour l'enregistrement temporaire des données de trace J0 ou J1 situées dans le surdébit (Overhead) du module de transport synchrone resp. du conteneur virtuel,
des capteurs de contrôle (TAD) pour la sélection de messages de défaut tels que LOS, LOF, MS-AIS, LOP et Au-AIS, par exemple,
une unité de mémoire temporaire (DSR) pour la mise en mémoire temporaire des messages de défaut sélectionnés,
un premier module (TSE) et
un deuxième module (TE),
**en ce que** le premier module (TSE) est configuré de manière telle qu'il contrôle la disponibilité d'une section de transmission à l'aide des messages de défaut sélectionnés et génère des variables d'état (TRL-AV, TRC-RX-ST) relatives à ladite disponibilité et **en ce que**
le deuxième module (TE) est configuré de manière telle que les données de trace J0 ou J1 sélectionnées lui sont amenées en cas de disponibilité d'une section de transmission et que sont déterminées, conformément à des procédures de sous-programme (SFT, TMD), en dépendance des variables d'état (TRL-AV, TRC-RX-ST) relatives à la disponibilité d'une section de transmission, les données de trace actuelles ainsi que les variables d'état (TRC-RX-ST, TRC-MM, TRC-RX) de celle-ci.

**8.** Circuit selon la revendication 7, **caractérisé en ce que** le premier module de programme (TSE) extrait et évalue les messages de défaut sélectionnés, un état d'alarme (TRC-MM) étant déterminé et l'affichage d'un signal d'alarme (AIS) étant provoqué sur la base d'une variable d'état d'alarme (SET-AIS) et les variables d'état (TRC-MM, TRX-RX-ST, TRC-RX) pour la commande du deuxième module de programme (TE) étant enregistrées temporairement dans une unité de mémoire d'état (SM).

**9.** Circuit selon la revendication 7 ou 8, **caractérisé en ce que** le deuxième module de programme (TE) est formé de telle manière que la disponibilité de la section est contrôlée à l'aide d'une première variable d'état (TRL-AV), **en ce qu'**en cas de non-disponibilité de la première variable d'état (TRL-AV) aucune autre étape de programme n'est exécutée et que toutes les grandeurs de sortie du deuxième module de programme (TE) conservent les valeurs qu'elles avaient jusqu'alors, **en ce qu'**en cas de disponibilité de la première variable d'état (TRL-AV) une première et une deuxième procédure de sous-programme (SFT, TDM) est exécutée, les variables d'état (TRC-MM, TRC-RX-ST, TRC-RX) étant déterminées et enregistrées dans l'unité de mémoire d'état (SM).

## F I G 1

## F I G 3

EP 0 766 421 B1

# FIG 2

| Trail Status Evaluation | TSE |

any trail affecting defects? (LOS,LOF,MS-AIS LOP,AU-AIS)

n

y

TRL_AV=false (trail not available)

TRL_AV=true (VC available)

TRC_RX_ST=unknown

TRC_MISMATCH =true?

n

TRC_MISMATCH=false

y

SET_AIS=false

AIS/FERF enabled?

n

y

SET_AIS=true

SET_AIS=false

12

EP 0 766 421 B1

# FIG 4

**Search for Trace** | **SFT**

Case of
TRC_RX_ST=

confirmed — unconfirmed — unknown

| Confirm current Trace | Confirm current Trace | Find new Trace |

Trace confirmed? —n
Trace confirmed? —n
Trace found ? —n

y | y | y

TRC_RX_ST =confirmed
TRC_RX_ST =TRC_NEW

TRC_RX_ST =unconfirmed
TRC_RX_ST =unknown
TRC_RX_ST =confirmed

13

# FIG 5

| Find new Trace | FNT |
|---|---|

read trace-buffer
(3 blocks of 16 bytes)

perform persistency
check (3 blocks)

persistency check
successfull? — n

y

extract one
block (16 bytes)

perform multiframe
alignment (find start byte)

trace-multiframe
found? — n

y

extract new trace
TRC_NEW
(all 16-bytes)

trace
not
found

trace
found

EP 0 766 421 B1

# FIG 6

confirm current Trace | CCT

read trace-buffer
(3 blocks of 16 bytes)

i=1(loop counter)

i>3? — y → trace unconfirmed

n

extract i-th block
of 16 bytes

perform multiframe
alignment (find start byte)

trace-multiframe
found? — n

y

compare with TRC_RX
(all 16 bytes)

TRC_RX
still found? — y → trace confirmed

n

i=i+1

15

EP 0 766 421 B1

# FIG 7